# EUROPEAN PATENT APPLICATION

(11) **EP 1 622 312 A1**
(43) Date of publication of application: **01.02.2006**
(21) Application number: 04291932.4
(22) Date of filing: 29.07.2004
(51) Int. Cl.: H04L 12/28, G08C 17/00

(54) **Method and apparatus for discovering wireless devices in a wireless network**

(71) Applicant: Sun Microsystems France S.A., 78142 Vélizy cedex (FR)
(72) Inventor: Perret, Stephane, Sun Microsystems France S.A., 78142 Velizy (FR); Gueye, Mouhamed N., Sun Microsystems France S.A., 78142 Velizy (FR); Blanc, Lois, 05000 Pelleautier (FR)
(74) Representative: Weihs, Bruno Konrad

(57) **Abstract**

A system, including a first device (100) comprising a first description and configured to provide a first service (128), wherein the first service (128) provides a first interface (132) accessible by a first port (134), and wherein the first description comprises a first device identifier (120), a first service identifier corresponding to the first service (128), a first interface identifier corresponding to the first interface (132), and a first port identifier corresponding to the first port (134), and an edge device (110) configured to communicate with the first device (100) and obtain the first description.

## Description

### Background

Dramatic advances in computer technology presently make it possible to integrate a wide range of devices into a network. In particular, advances in computer technology allow devices of all sizes to be integrated into a network. Thus, networks may include personal computers, servers, and other devices with significant amounts of computer resources, as well as small devices that have limited computing power and limited resources (*e.g*., memory, communication hardware, etc.). These small devices may be, for example, tiny transducing devices such as sensors (*e.g*., sensors that record the current temperature, etc.), devices that act as switches (*e.g*., a device that may be used to turn ON and OFF a light), etc. In addition to being able to integrate a wide range of devices into a network, current computer technology also allows the devices to join and leave networks in a dynamic manner.

In view of the aforementioned advances in computer technology, protocols used to enable communication between devices in the network must include functionality to be able to discover/determine which devices are available on the network, and determine what service (or services) each device is configured to provide. Further, the aforementioned functionality of the protocols must be designed to work on a wide range of devices with different amounts of computing power, resources, etc., and designed to work in both wired and wireless networks.

Conventional protocols for device discovery on a network include, but are not limited to, JINI™ (JINI is a trademark of Sun Microsystems, California, USA), the Universal Plug and Play (UPnP) architecture, etc. The aforementioned protocols typically use Internet Protocol (IP) (or an equivalent) for communication between nodes and require large network packet sizes to store the request/responses communicated between devices. Further, the aforementioned protocols are typically implemented on wired networks.

With the increased focus on wireless networks, a number of wireless device communication and discovery protocols have also emerged. These protocols include, but are not limited to, the 802.11 ("WiFi") protocol, the 802.15.1 ("Bluetooth") protocol, and the Zigbee protocol. The WiFi protocol supports a low level of device discovery using beacon frames. In addition, communication (including discovery) between devices using the WiFi protocol is conducted with packets that are defined using IP at a transfer rate of approximately 11 Mbps. The Bluetooth protocol uses a novel discovery mechanism using Frequency Hoping technology at a 1Mbps transfer rate. The discovery mechanism implemented in the Bluetooth protocol may be considered time intensive, taking up to 10s to determine surrounding devices.

Finally, the emerging Zigbee technology provides a set of protocols using the low-rate wireless communication standards 802.15.4 (*e.g*., 250Kbps). The Zigbee protocol is in the process of being defined and should provide a discovery mechanism similar to Bluetooth technology to browse surrounding devices profile. The Zigbee protocol supports both star and mesh network topologies and is designed to enable a larger numbers of sensors (*e.g*., approximately 65536 sensors) to communicate within a single wireless network.

### Summary

In general, in one aspect, the invention relates to a system, comprising a first device (100) comprising a first description and configured to provide a first service (128), wherein the first service (128) provides a first interface (132) accessible by a first port (134), and wherein the first description comprises a first device identifier (120), a first service identifier corresponding to the first service (128), a first interface identifier corresponding to the first interface (132), and a first port identifier corresponding to the first port (134), and an edge device (110) configured to communicate with the first device (100) and obtain the first description.

In general, in one aspect, the invention further relates to a system wherein the first device (100) is further configured to provide a third service, wherein the third service provides a third interface accessible by a third port, and wherein the description further comprises a third service identifier corresponding to the third service, a third interface identifier corresponding to the third interface, and a third port identifier corresponding to the third port.

In general, in one aspect, the invention: the first device identifier (120) is a cryptographic-based identifier; the first service identifier, the first interface identifier, and the first port identifier are represented as integers; the first device (100) comprises functionality to send a message (141) to the edge device (110), wherein the edge device is a directory (108); the message (141) comprises an advertise payload (170); the advertise payload (170) comprises a refresh rate (172) of the first device (100); the edge device (110) is configured to respond to the message (141) comprising the advertise payload (170) with a message (141) comprising a get description payload (178); wherein the get description payload (178) comprises a tag (180); and the tag (180) identifies the message (141) comprising the get description payload (178);

In general, in one aspect, the invention: the first device (100) is configured to respond to the message (141) comprising the get description payload (178) with a message (141) comprising a description return payload (182); the description return payload (182) comprises the tag (184) and the first description; the edge device (110) sends a message (141) comprising a lookup payload (148) to the first device (100) and the second device (102); the lookup payload (148) comprises a non-null value for at least one field selected from the group consisting of a vendor ID (150), a class ID (152), a service ID (154), an interface ID (156), and a power model (158); and the first device (100) responds to the message (141) comprising the lookup payload (148) with a message (141) comprising a lookup response payload (162), if the first description matches all the non-null fields in the lookup payload (148).

In general, in one aspect, the invention: the lookup response payload (162) comprises a number of devices (166) that match the lookup payload (148) and a device identifier for each device that matches the lookup payload (148); the first device (100) is configured to send a message (141) comprising a lookup payload (148) to the second device (102); the second device (102) responds to the first device (100) with a message (141) comprising a lookup response payload (162), if the second description matches all non-null values in the lookup payload (148); the advertise payload (262) comprises a refresh rate of the device; the get description payload (266) comprises a tag; and the description return payload (268) further comprises the tag.

Further, in one embodiment of the invention, the invention includes functionality to search a wireless network, wherein the search criteria further comprises at least one selected from the group consisting of a service ID (154) and an interface ID (156).

In general, in one aspect, the invention relates to a method for discovering a device (258) by a directory (260) comprising broadcasting a message comprising a directory payload (264) to the device (258), receiving a message comprising an advertise payload (262) from the device (258) in response to the message comprising the directory payload (264), sending a message comprising a get description payload (266) to the device (258) in response to receiving the message comprising the advertise payload (262), and receiving a message comprising a description return payload (268) from the device (258), wherein the description return payload (268) comprises a description corresponding to the device (258).

In general, in one aspect, the invention relates to a method for obtaining a description of a device (272) by an edge device (274) comprising broadcasting a message comprising a lookup payload (276) to the device (272), receiving a message comprising a lookup response payload (278) from the device (272) in response to the message comprising the lookup payload (276), if the description of the device (272) matches corresponding non-null fields in the lookup payload (276), sending a message comprising a get description payload (280) to the device (272) in response to receiving the message comprising the lookup response payload (278), and receiving a message comprising a description return payload (282) from the device, wherein the description return payload (282) comprises a description corresponding to the device (272).

In general, in one aspect, the invention: the lookup payload (276) comprises a non-null value for at least one field selected from the group consisting of a vendor ID, a class ID, a service ID, an interface ID, and a power model; and the lookup response payload (278) comprises a number of devices that match the lookup payload (276) and a device identifier for each device that matches the lookup payload (276).

In general, in one aspect, the invention relates to a method for a first device (240) to communicate with a second device (242), comprising broadcasting a message comprising a lookup payload (246) by the first device (240) to the second device (242), and receiving a message comprising a lookup response payload (248) from the second device (242) in response to the message comprising the lookup payload (246), if the description of the second device (242) matches corresponding non-null fields in the lookup payload (246).

Other aspects of the invention will be apparent from the following description and the appended claims.

### Brief Description of Drawings

Figure 1 shows a system in accordance with one embodiment of the invention.

Figure 2 shows a tiny device in accordance with one embodiment of the invention.

Figures 3A-3J show packets in accordance with one embodiment of the invention.

Figures 4A-4D show interaction of devices in the system in accordance with one embodiment of the invention.

### Detailed Description

Exemplary embodiments of the invention will be described with reference to the accompanying drawings. Like items in the drawings are shown with the same reference numbers.

In an embodiment of the invention, numerous specific details are set forth in order to provide a more thorough understanding of the invention. However, it will be apparent to one of ordinary skill in the art that the invention may be practiced without these specific details. In other instances, well-known features have not been described in detail to avoid obscuring the invention.

In general, embodiments of the invention relate to a method and apparatus for discovering devices in a network. More specifically, embodiments of the invention relate to a method and apparatus for discovering devices in a wireless network. Further, embodiments of the invention provide a method and apparatus for enabling discovery of devices in a network having limited resources (e.g., small transducing devices such as sensors, switches, etc.). Further, embodiments of the invention provide a method and apparatus for determining the services provided by the devices in the network that have limited resources.

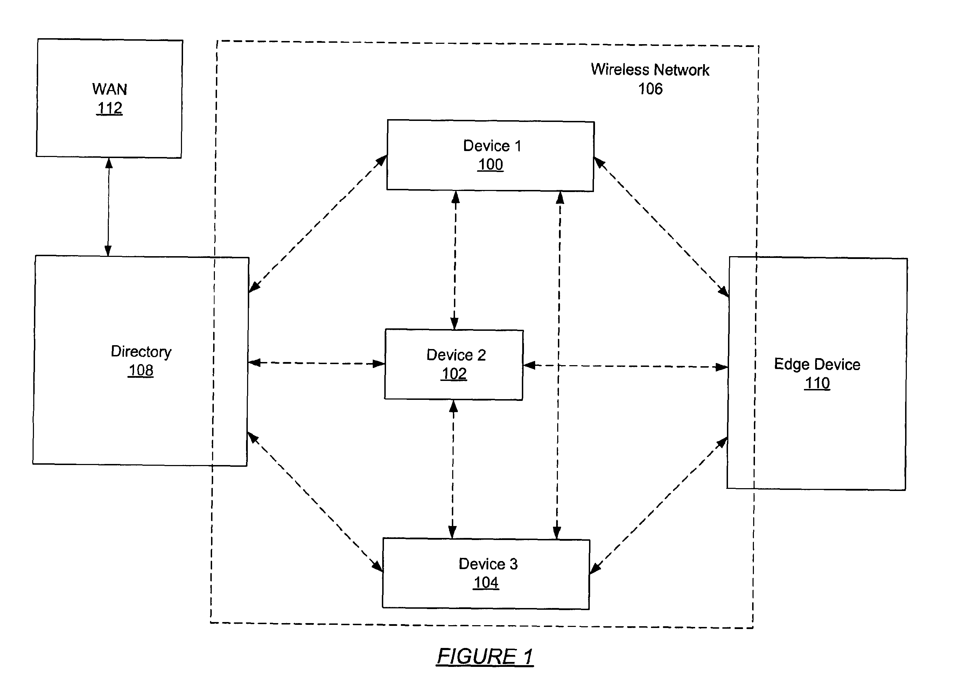

Figure 1 shows a system in accordance with one embodiment of the invention. As shown in Figure 1, the system includes a number of devices (Device 1 (100), Device 2 (102), Device 3 (104)). In one embodiment of the invention, each device (Device 1 (100), Device 2 (102), Device 3 (104)) corresponds to a device having limited resources (*e*.*g*., limited computing power, limited memory, power constraints, etc.) such as transducing devices operating as sensors, electronic switches, etc. Further, each device (Device 1 (100), Device 2 (102), Device 3 (104)) includes functionality to communicate directly with other devices (Device 1 (100), Device 2 (102), Device 3 (104)). In the embodiment shown in Figure 1, the devices (Device 1 (100), Device 2 (102), Device 3 (104)) are located within a wireless network (106). The wireless network (106) refers to the general physical area in which the devices (Device 1 (100), Device 2 (102), Device 3 (104)) are located as well as the region surrounding the devices (Device 1 (100), Device 2 (102), Device 3 (104)) to which the devices (Device 1 (100), Device 2 (102), Device 3 (104)) may wirelessly transmit data.

In one embodiment of the invention, the wireless network (106) also includes a directory (108) and an edge device (110). In one embodiment of the invention, the directory (108) is a specific type of edge device. The directory (108) is typically configured to store the descriptions of the devices (Device 1 (100), Device 2 (102), Device 3 (104)) located in the wireless network (106). Further, the directory (108) stores information to enable edge devices (108) to understand the description of the devices (Device 1 (100), Device 2 (102), Device 3 (104)). The contents and use of the description of the devices (Device 1 (100), Device 2 (102), Device 3 (104)) are described below.

Continuing with the discussion of Figure 1, the directory (108) may further provide a link between the wireless network (106) and a wide area network (WAN) (112) (or other network). In addition, the directory (108) is typically a permanent member of the wireless network (106). In some instances, the directory (108) may be a transient member of the wireless network (106), for example, in an implementation in which the communication is primarily between the devices (Device 1 (100), Device 2 (102), Device 3 (104)) within the wireless network (106) with minimal communication outside the wireless network (106). In contrast, an edge device (110) that is not a directory (108), is typically transient members of the wireless network (106) and communicate with the devices (Device 1 (100), Device 2 (102), Device 3 (104)) as needed, to use the services provided by the devices (Device 1 (100), Device 2 (102), Device 3 (104)) within the wireless network (106). Once the edge device (110) is done using the particular service (or services), the edge device (110) typically disconnects from the wireless network (106).

Those skilled in the art will appreciate that the directory (108) and the edge device (110) include the necessary functionality to communicate with the devices (Device 1 (100), Device 2 (102), Device 3 (104)) in the wireless network (106) using the discovery mechanism described below. Further, those skilled in the art will appreciate that while the system shown in Figure 1 only includes one directory and one edge device, the system may include multiple directories and multiple edge devices. Further, the communication channels
- between the devices (Device 1 (100), Device 2 (102), Device 3 (104)),
- between the devices (Device 1 (100), Device 2 (102), Device 3 (104)) and the directory (108), and
- between the devices (Device 1 (100), Device 2 (102), Device 3 (104)) and the edge device (110)
are all shown using dashed lines to indicate that the communication may be intermittent (*i.e.*, the communication does not need to be continuous).

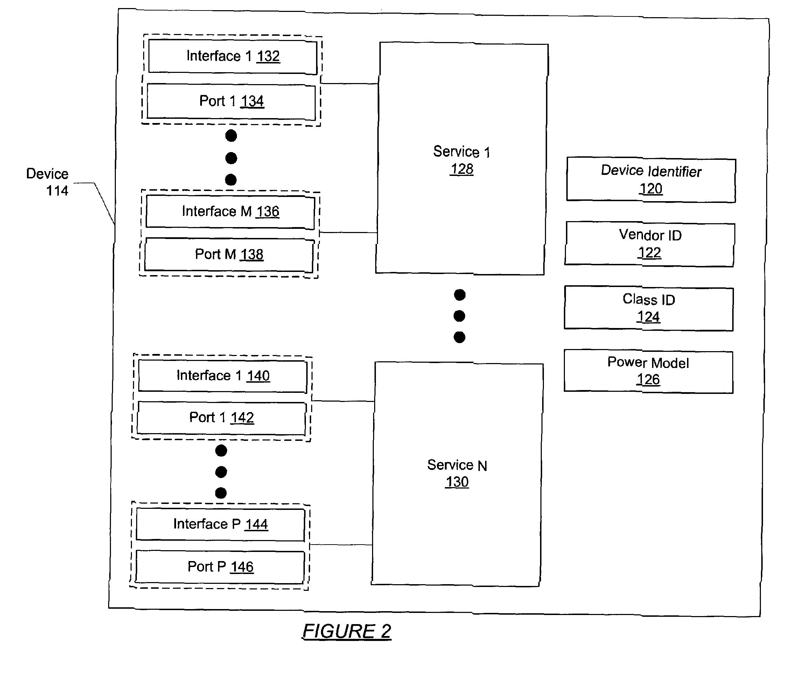

Figure 2 shows a device (114) in accordance with one embodiment of the invention. More specifically, Figure 2 shows the components that may be within a device in accordance with one embodiment of the invention. The components (or subset of the components) shown in Figure 2 may be used to generate a description of the device. The device (114) shown in Figure 2 includes a set of descriptors which may be used to identify the device (114). These descriptors may include a device identifier (120), a vendor ID (122), a class ID (124), and a power model (126).

The device identifier (120) is typically a number that uniquely identifies the device (114). In one embodiment of the invention, the device identifier (120) is generated using a cryptographic function and is 128-bits in length. In one embodiment of the invention, the device identifier corresponds to a Universal Unique Identifier (UUID).

The vendor ID (122) corresponds to an identifier of the product assigned by the vendor of the device (114). In one embodiment of the invention, the vendor ID (122) is 16-bits. The class ID (124) corresponds to the generic class of the device (114), *e.g*., a light, a temperature sensor, etc. In one embodiment of the invention, the class ID (124) is 16-bits. The power model (126) typically identifies the power source of the device (114), *e.g*., battery powered, A/C powered, etc. In one embodiment of the invention, the power module (126) is 8-bits in length.

In addition to the set of descriptors, each device (114) provides at least one service. Further, another entity (*e.g*., a device, an edge device, etc.) may interact with the service using one or more interfaces exposed by the service via the corresponding ports bound to the interfaces. For example, the device (114) shown in Figure 2, includes multiple *(i.e.,* N) services (*i*.*e*., Service 1 (128) to Service N (130)). With respect to the services, each service (Service 1 (128) to Service N (130)) exposes a number of interfaces (*i.e.,* Interface 1 (132) to Interface M (136) for Service 1 (128), and Interface 1 (140) to Interface P (144) for Service N (130)), which are accessible through corresponding ports (*i*.*e*., port 1 (134) to port M (138) for Interface 1 (132) to Interface M (136), and port 1 (142) to port P (146) for Interface 1 (140) to Interface P (144)). In the above discussion of services and interfaces, if the device supports the service "Light," for example, then the interfaces to the service may be "Switch" and "Potentiometer."

In one embodiment of the invention, each service is identified by a service ID, the interface by an interface ID, and the port by a port ID. Further, in one embodiment of the invention, the service ID is 16-bits, the interface ID is 16-bits, and the port ID is 8-bits. Those skilled in the art will appreciate that while the invention discloses one embodiment showing the contents of the device, the contents of the device may be modified (*i*.*e*., additional components added, one or more components removed, or a combination of adding and removing components) without changing the scope of the invention.

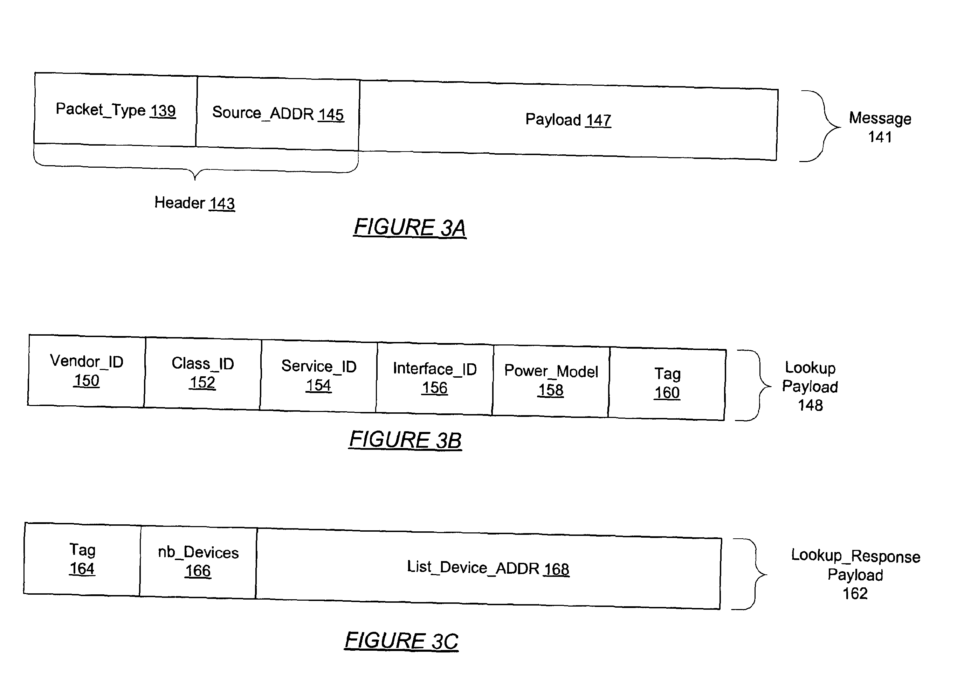

The aforementioned identifiers (*e.g*., the device identifier, the vendor ID, the class ID, the power model, the service ID, the interface ID, and the port ID), provide a description framework which may be used as the basis for a discovery mechanism. More specifically, the aforementioned identifiers (or subset thereof) may be used to enable discovery of devices and services provided by devices in accordance with one embodiment of the invention. In particular, the aforementioned identifiers may be used in messages communicated between entities (*e.g*., devices, edge devices, directories) in the wireless network. Figures 3A-3J show a set of message payloads used to enable discovery of devices in accordance with one embodiment of the invention.

Figure 3A shows a message (141) in accordance with one embodiment of the invention. The message (141) includes a header (143) and a payload (147). The header (143) includes a packet_type (139) and a source_ADDR (145). The packet_type (139) indicates which type of payload (*see* Figures 3B-3J for payload types) is embedded within the payload (147) portion of the message (141). The source_ADDR (145) corresponds to the address of the entity (*e.g*., devices, edge devices, directories) sending the message (141). In one embodiment of the invention, the message (141) has a maximum size of 29 bytes, of which the header (143) is 3 bytes and the payload (147) is a maximum of 26 bytes. Further, in one embodiment of the invention, the contents of each portion of the message (141) *(i.e.,* the packet_type (139), the source_ADDR (145), the entire contents of the payload (147)) is expressed as raw bytes, for example, as integers. In one embodiment of the invention, a directory communicating with the device includes the necessary functionality to decode the contents of the message (*i.e*., determine what the various raw bytes in the given portions of the message mean, convert the raw bytes into human understandable information, such as words, etc.). The different payload types are described below in detail.

Figure 3B shows a lookup payload (148) in accordance with one embodiment of the invention. The lookup payload (148) is typically used to filter devices in the wireless network based on a set of search criteria. Thus, if an entity (*e.g*., a device, an edge device, a directory, etc.) is looking for a specific device or type of device, the entity may use the lookup payload (148) to determine whether such a device is present in the wireless network. In the embodiment shown in Figure 3B, the lookup payload (148) includes the following fields: Vendor_ID (150), Class_ID (152), Service_ID (154), Interface_ID (156), Power Model (158), and tag (160). In one embodiment of the invention, the tag (160) is 8-bits. The fields have been defined above.

In this embodiment of the lookup payload (148), an entity may search for a device by specifying one or more of the following fields with non-null values: the Vendor_ID (150), the Class_ID (152), the Service_ID (154), the Interface_ID (156), and the Power Model (158). The lookup payload (148) also includes the tag (160) that is used to identify the particular lookup payload (148). Further, the tag (160) is also used by devices that respond to the message containing the lookup payload (148). This enables the entity that sent out the lookup payload (148) to readily identify a response that corresponds to the message containing the lookup payload (148).

Figure 3C shows a lookup_response payload (162) in accordance with one embodiment of the invention. The lookup_response payload (162) is included in messages that are sent by entities (*e.g*., directories, devices, etc.) responding to messages containing the lookup payload (148). In the embodiment shown in Figure 3C, the lookup_response payload (162) includes the following fields: tag (164), nb_Devices (166), and List_Device_ADDR (168). As noted above, tag (164) corresponds to the tag used in the message containing the lookup payload (148). Further, nb_Devices (166) correspond to the number of devices that match the criteria specified (*i.e*., the non-null fields) in the message containing the lookup payload (148), and the List_Device_ADDR (168) corresponds to a list of device addresses that match the criteria specified in the message containing the lookup payload (148). Those skilled in the art will appreciate that a directory and a device may both respond to a message containing the lookup payload (148) with a message containing a lookup_response payload (162). Further, in the case where a device is responding with a message containing a lookup_response payload (162), the nb_Devices (166) will have a value of 1, and the List_Device_ADDR (168) will only have one device address (*i.e.,* the device address of the device that generated the message containing a lookup_response (162) payload).

Figure 3D shows an advertise payload (170) in accordance with one embodiment of the invention. A message containing the advertise payload (170) is issued by devices either to alert the directory to the devices presence or in response to a message containing a directory payload (*see* Figure 3E). The advertise payload (170) includes a refresh_rate (172) that indicates the time (in seconds) between subsequent device advertisements (*i*.*e*., the time between the device sending a first message containing an advertise payload (170) and the device sending a second message containing an advertise payload (170)). If the device is sending out a message containing an advertise payload (170) that is not in response to a message containing a directory payload *(see* Figure 3E), then the value of refresh_rate (172) corresponds to the lowest refreshing period supported by the device. Alternatively, if the message containing the advertise payload (170) is in response to a message containing the directory payload (*see* Figure 3E), then the value of refresh_rate (172) corresponds to a refresh rate negotiated with the directory that issued the message containing the directory payload *(see* Figure 3E). In one embodiment of the invention, the refresh_rate (172) is 16-bits.

Figure 3E shows a directory payload (174) in accordance with one embodiment of the invention. Similar to the advertise payload (170), messages containing the directory payload (174) are issued by a directory in response to a message containing an advertise payload (170) or issued by the directory to alert devices of the directory's presence in the wireless network. The directory payload (174) includes a refresh_rate (176) that indicates the time (in seconds) between subsequent directory advertisements (*i*.*e*., the time between the directory sending a first message containing a directory payload (174) and the device sending a second message containing a directory payload (174)). The value of the refresh_rate (176) is typically negotiated with the device(s) in the wireless network. In one embodiment of the invention, the refresh_rate (176) has a value that is greater than or equal to the lowest refresh rate supported by the device(s) in the wireless network. In one embodiment of the invention, the refresh_rate (176) is 16-bits.

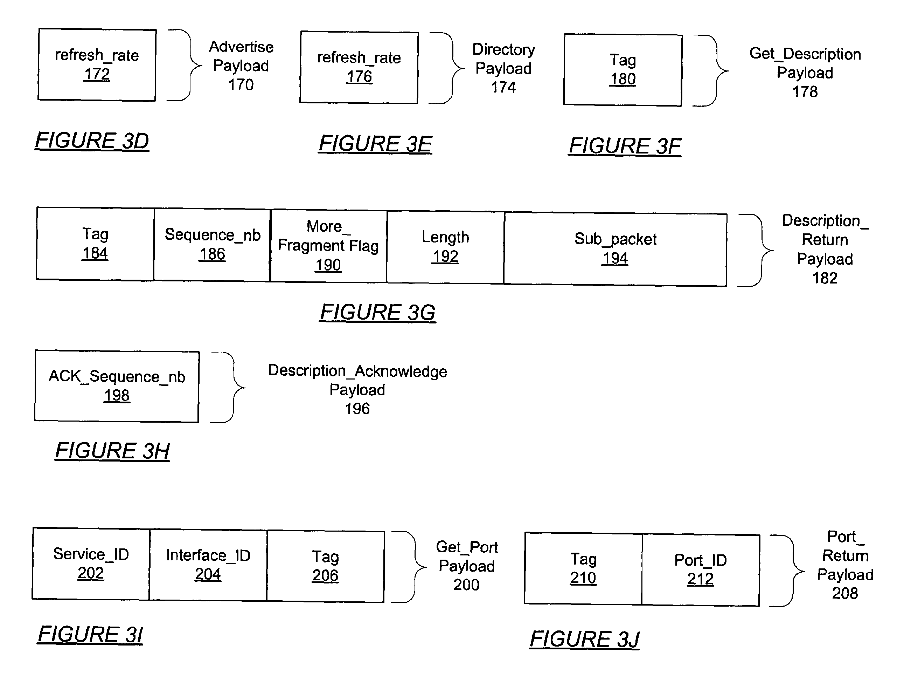

Figure **3F** shows a get_description payload (178) in accordance with one embodiment of the invention. Messages containing the get_description payload (178) may be issued by any entity (*e.g*., device, edge device, directory, etc.) in the wireless network, and are used to request a description about a device. Thus, messages including the get_description payload (178) may be received by directories and devices. In one embodiment of the invention, the get_description payload (178) includes a tag (180). The tag (180) is used to identify the request and allows the issuing entity to tracking the responses to the particular request (as the responses include the tag, *see* Figure 3G). In one embodiment of the invention, the tag (180) is 8-bits.

Figure 3G shows a description_return payload (182) in accordance with one embodiment of the invention. Messages including the description_return payload (182) are issued in response to messages including a get_description payload (178). Given the limited size of individual messages, *e.g*., 29-bytes, a description of a given device may require more then 29-bytes to convey. Accordingly, messages containing the description_return payload (182) include the necessary information to convey parts (*i.e.*, fragments) of the description to the destination entity (*e.g*^{.}, a directory, edge device, etc.). The information conveyed with the individual fragments may be used to reassemble the description at the receiving entity.

In one embodiment of the invention, the description_return payload (182) includes the following fields: Tag (184), Sequence_nb (186), More_Fragment_Flag (190), Length (192), and Sub_packet (194). The Tag (184) field includes the value of tag (180) in the corresponding get_description payload (178), as discussed above. The Sequence_nb (186) field includes the sequence number of the fragment to aid the destination entity in assembling the description. The More_Fragment_Flag (190) field indicates whether the particular message containing the description_return payload (182) includes the last fragment of the description. The Length (192) field indicates the length of the fragment (*i*.*e*., the length of Sub_packet (194)). The Sub_packet (194) field includes the description or a fragment of the description (depending on the size of the description). Thus, the Sub_packet (194) may include some or all of the information related to the device, for example, as shown in Figure 2.

Figure 3H shows a Description_Acknowledge payload (196) in accordance with one embodiment of the invention. Messages including the Description_Acknowledge payload (196) are typically used by an entity receiving messages containing Description_Return payloads (182) to acknowledge that a particular fragment of the description has been received. In one embodiment of the invention, the Description_Acknowledge payload (196) includes an ACK_Sequence_nb (198) field. ACK_Sequence_nb (198) includes the value of the received fragment as identified by Sequence_nb (186) in the message containing the Description_Return payload (182).

Figure 3I shows a Get_Port payload (200) in accordance with one embodiment of the invention. Messages containing the Get_Port payload (200) request the port used by an interface exposed by a service implemented on a particular device. Thus, messages containing the Get_Port payload (200) are typically sent to a specific device. In one embodiment of the invention, the Get_Port payload (200) includes the following fields: Service_ID (202), Interface_ID (204), and Tag (206). Service_ID (202) identifies a particular service provided by the device. Interface_ID (204) identifies a particular interface exposed by the particular service. Tag (206) identifies the particular message containing the Get_Port payload (200).

Figure 3J shows a Port_Return payload (208) in accordance with one embodiment of the invention. Messages containing the Port_Return payload (208) are typically generated by a device in response to receiving a message containing a Get_Port payload (200). The Port_Return payload (208) includes the following fields: Tag (210) and Port_ID (212). The Tag (210) field includes the value of tag (206) in the corresponding message containing the Get_Port payload (200), thereby allowing the receiving entity to determine which Get_Port payload (200) message the Port_Return payload (208) corresponds to. Further, the Port (212) field includes the value of the port corresponding to the Service_ID (202) and the Interface_ID (204) in the message containing the Get_Port payload (200).

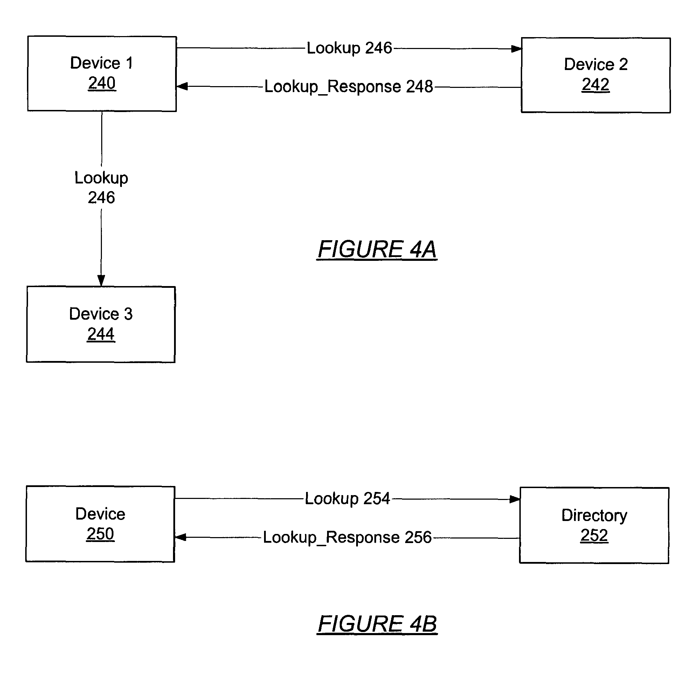

Using the aforementioned payloads the following interactions between various entities in the wireless network may occur. Figures 4A-4D show embodiments of various interactions between entities within the wireless network. Those skilled in the art will appreciate that additional interactions that are not shown in Figures 4A-4D may also occur using the aforementioned payloads and are within the scope of the invention.

Figure 4A shows an interaction between devices in accordance with one embodiment of the invention. In the example shown in Figure 4A, three devices are directly interacting with each other. In the particular scenario shown in Figure 4A, Device 1 (240) may issue a message containing a lookup (246) payload to all other devices in the network (*i*.*e*., Device 2 (242), Device 3 (244)). As noted above, messages containing the lookup (246) payload include a number of fields that may be used to locate devices that have very specific characteristics (based on their descriptions). Thus, devices that do not have the specific characteristics as specified in the message containing the lookup (246) payload may not respond, and devices that do have the specific characteristics may respond.

In the scenario shown in Figure 4A, Device 2 (242) includes the specific characteristics as specified in the message containing the lookup (246) payload, and, thus, responds with a message containing the Lookup_Response (248) payload. However, Device 3 (244) does not have the specific characteristics as specified in the message containing the Lookup (246) payload; thus, Device 3 (244) does not respond.

Figure 4B shows an interaction between a device and a directory in accordance with one embodiment of the invention. In the particular scenario shown in Figure 4B, the Device (250) sends a message containing a Lookup (254) payload to the Directory (252). The Directory (252), in response to receiving the message containing the Lookup (254) payload, queries the descriptions stored in the Directory (252) and generates a message containing a Lookup_Response (256) payload, if any descriptions stored in the Directory (252) match the specific characteristics specified in the message containing the Lookup (254) payload.

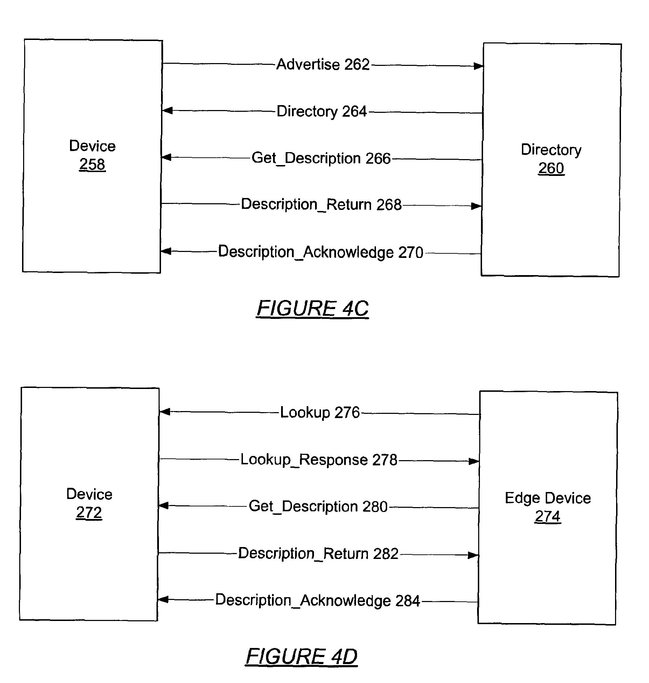

Figure 4C shows an interaction of a device and a directory in accordance with one embodiment of the invention. In the particular scenario shown in Figure 4C, the Device (258) broadcasts a message containing an advertise (262) payload. The message containing the advertise (262) payload is subsequently acknowledged by the Directory (260), which sends a message containing a directory (264) payload. After the Directory (260) has acknowledged presence of the Device (258), the Directory (260) attempts to obtain the description of the Device (258) by issuing a message containing a Get_Description (266) payload. The Device (258), in response to receiving the message containing the Get_Description (266) payload, generates and sends one or more messages containing a Description_Return (268) payload. Upon receiving each message containing a Description_Return (268) payload, the Directory (260) issues a message containing a Description_Acknowledge (270) payload.

Figure 4D shows an interaction of a device and an edge device in accordance with one embodiment of the invention. Initially, the Edge Device (274) issues a message containing a Lookup (276) payload. The Device (272) subsequently issues a message containing a Lookup_Response (278) payload, if the description of the Device (272) includes the characteristics specified in the Lookup (276) payload. After the Edge Device (274) receives a response from the Device (272) (*i.e.*, a message containing a Lookup_Response (278) payload), the Edge Device (274) attempts to obtain the description of the Device (272) by issuing a message containing a Get_Description (280) payload. The Device (272), in response to receiving the message containing the Get_Description (280) payload, generates and sends one or more messages containing a Description_Return (282) payload. Upon receiving each message containing a Description_Return (282) payload, the Edge Device (274) issues a message containing a Description_Acknowledge (284) payload.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A system, comprising:
a first device (100) comprising a first description and configured to provide a first service (128),
wherein the first service (128) provides a first interface (132) accessible by a first port (134), and
wherein the first description comprises a first device identifier (120), a first service identifier corresponding to the first service (128), a first interface identifier corresponding to the first interface (132), and a first port identifier corresponding to the first port (134); and
an edge device (110) configured to communicate with the first device (100) and obtain the first description.

2. The system of claim 1, further comprising:
a second device (102) comprising a second description and configured to provide a second service,
wherein the second service provides a second interface accessible by a second port,
wherein the second description comprises a second device identifier, a second service identifier corresponding to the second service, a second interface identifier corresponding to the second interface, and a second port identifier corresponding to the second port, and
wherein the second device (102) is configured to communicate directly with the first device (100) to obtain the first description.

3. The system of claim 1, wherein first description further comprises at least one selected from the group consisting of a vendor ID (122), a class ID (124), and a power model (126).

4. The system of claim 1, wherein the edge device (110) is further configured to search the system for the first device (100) using a search criteria.

5. The system of claim 4, wherein the search criteria comprises at least one selected from the group consisting of the vendor ID (122), the class ID (124), and the power model (126).

6. The system of claim 1, wherein the edge device (110) is a directory (108), and wherein the directory (108) comprises a table mapping integers corresponding to the first service identifier, the first interface identifier, and the first port identifier, to a corresponding alpha-numeric value.

7. A method for discovering a device (258) by a directory (260) comprising:
broadcasting a message comprising a directory payload (264) to the device (258);
receiving a message comprising an advertise payload (262) from the device (258) in response to the message comprising the directory payload (264);
sending a message comprising a get description payload (266) to the device (258) in response to receiving the message comprising the advertise payload (262); and
receiving a message comprising a description return payload (268) from the device (258), wherein the description return payload (268) comprises a description corresponding to the device (258).

8. The method of claim 7, wherein the description comprises a vendor ID (122), a class ID (124), a power model (126), at least one service, at least one interface associated with the at least one service, and at least one port associated with the at least one service.

9. A method for obtaining a description of a device (272) by an edge device (274) comprising:
broadcasting a message comprising a lookup payload (276) to the device (272);
receiving a message comprising a lookup response payload (278) from the device (272) in response to the message comprising the lookup payload (276), if the description of the device (272) matches corresponding non-null fields in the lookup payload (276);
sending a message comprising a get description payload (280) to the device (272) in response to receiving the message comprising the lookup response payload (278); and
receiving a message comprising a description return payload (282) from the device, wherein the description return payload (282) comprises a description corresponding to the device (272).

10. The method of claim 9, wherein the lookup payload (276) comprises a non-null value for at least one field selected from the group consisting of a vendor ID (150), a class ID (152), a service ID (154), an interface ID (156), and a power model (158).
